# EUROPÄISCHE PATENTSCHRIFT

(11) **EP 3 610 182 B1**
(45) Veröffentlichungstag und Bekanntmachung des Hinweises auf die Patenterteilung: **07.04.2021**
(21) Anmeldenummer: 18705888.8
(22) Anmeldetag: 14.02.2018
(51) Int. Cl.: F16K 1/52, F16K 27/02, F16K 31/06

(54) **PROPORTIONALVENTIL ZUM STEUERN EINES GASFÖRMIGEN MEDIUMS**
PROPORTIONAL VALVE FOR CONTROLLING A GASEOUS MEDIUM
SOUPAPE PROPORTIONNELLE SERVANT À COMMANDER UN MILIEU SOUS FORME GAZEUSE

(30) Priorität: 13.04.2017 DE 102017206389
(43) Veröffentlichungstag der Anmeldung: 19.02.2020
(73) Patentinhaber: Robert Bosch GmbH, 70442 Stuttgart (DE)
(72) Erfinder: GRUENBERGER, Andreas, 73565 Spraitbach (DE); WESSNER, Jochen, 73728 Esslingen (DE); MAGEL, Hans-Christoph, 72764 Reutlingen (DE)
(86) Internationale Anmeldenummer: PCT/EP2018/053691
(87) Internationale Veröffentlichungsnummer: WO 2018/188834

(56) Entgegenhaltungen:
- DE-A1-102008 015 147
- DE-U1-202013 009 183
- DE-U1-202013 009 183
- JP-A- 2011 102 597
- US-A- 6 076 550
- US-A1- 2007 176 025
- US-B1- 6 609 698

## Beschreibung

Die Erfindung betrifft ein Proportionalventil zum Steuern eines gasförmigen Mediums, insbesondere Wasserstoff, beispielsweise zur Anwendung in Fahrzeugen mit Brennstoffzellenantrieb.

### Stand der Technik

Im Bereich der Fahrzeugentwicklung sind gasförmige Kraftstoffe eine Alternative zu den herkömmlichen flüssigen Kraftstoffen, insbesondere Wasserstoff. Bei Fahrzeugen mit einer Brennstoffzelle als Antrieb ist es dabei notwendig, Wasserstoffgasströme zu steuern, wobei die Gasströme nicht diskontinuierlich wie bei der Einspritzung von flüssigem Kraftstoff gesteuert werden, sondern es werden beispielsweise Proportionalventile verwendet, welche in Abhängigkeit von einer gewünschten Antriebsleistung einen Öffnungsquerschnitt anpassen.

Aus der DE 10 2012 204 565 ist ein Proportionalventil zum Steuern eines gasförmigen Mediums bekannt. Das Proportionalventil umfasst einen Düsenkörper mit einer Durchlassöffnung, ein Schließelement mit einem elastischen Element. Die Durchlassöffnung ist durch das Schließelement an einem Ventilsitz freigeb- und verschließbar. Das elastische Dichtelement dichtet am Ventilsitz ab und weist eine Ausnehmung mit einem Innenwandbereich auf. Der Innenwandbereich ist im geschlossenen Zustand des Proportionalventils mit Druck des gasförmigen Mediums beaufschlagt. Durch diese Anordnung wird ein verbessertes Anliegen des Dichtelements an dem Ventilsitz und somit eine verbesserte Dichtheit am Ventilsitz erzielt

US 6,076,550 offenbart ein Proportionalventil gemäß dem Oberbegriff von Anspruch 1.

Um eine effektive Funktionsweise des Proportionalventils zu gewährleisten, ist bei höherer Dichtheit auch ein höherer Magnetkraftbedarf erforderlich. Dies hat unter Umständen einen größeren Bauraum zur Folge und führt somit zu einer ineffektiven Bauweise des gesamten Proportionalventils.

### Vorteile der Erfindung

Das erfindungsgemäße Proportionalventil zum Steuern eines gasförmigen Mediums, insbesondere Wasserstoff, weist demgegenüber den Vorteil auf, dass trotz Verwendung einer höheren Magnetkraft ein möglichst geringer Bauraum realisiert werden kann. Dazu weist das Proportionalventil ein Ventilgehäuse auf, in dem ein Innenraum ausgebildet ist. In dem Innenraum ist eine Magnetspule mit einem Außenpol und einem Innenpol angeordnet. Darüber hinaus ist der Innenpol zweiteilig ausgebildet und umfasst ein erstes Innenpolelement und ein zweites Innenpolelement.

Durch die Zweiteilung des Innenpols in ein erstes Innenpolelement und ein zweites Innenpolelement ist es möglich, das erste Innenpolelement und das zweite Innenpolelement derart an die Gegebenheiten im Proportionalventil anzupassen, so dass eine optimale Funktionsweise des Proportionalventils gewährleistet ist.

In einer ersten vorteilhaften Ausgestaltung der Erfindung ist es vorgesehen, dass das erste Innenpolelement und das zweite Innenpolelement fest verbunden sind, beispielsweise durch eine Verpressung. Dabei kann durch eine gestufte Kontaktfläche des ersten Innenpolelements und/oder des zweiten Innenpolelements eine hohe Flächenpressung erfolgen. Weiterhin ist auch eine Verschweißung des ersten Innenpolelements mit dem zweiten Innenpolelement möglich. Durch die Verbindung des ersten Innenpolelements und des zweiten Innenpolelements wird ein geringer Bauraum im Proportionalventil begünstigt.

In vorteilhafter Weiterbildung der Erfindung ist das zweite Innenpolelement von einem Hülsenelement umgeben. Vorteilhafterweise ist das Hülsenelement aus einem nicht magnetischen Material hergestellt. So kann das Hülsenelement anstatt des zweiten Innenpolelements eine Dichtheit nach außen, insbesondere zur Magnetspule, gewährleisten.

In weiterer Ausgestaltung des Erfindungsgedankens ist es vorteilhaft vorgesehen, dass das Hülsenelement mit dem ersten Innenpolelement und/oder dem Ventilgehäuse fest verbunden ist, beispielsweise durch eine Schweißnaht. Dadurch kann das erste Innenpolelement optimal in dem Innenraum ausgerichtet werden. Das Hülsenelement dient dabei als Abstandshalter zwischen dem Ventilgehäuse und dem ersten Innenpolelement. Vorteilhafterweise ist das zweite Innenpolelement in dem Hülsenelement fixiert, vorzugsweise durch eine Verpressung oder eine Schweißnaht. So erfolgt eine optimale Ausrichtung des zweiten Innenpolelements im Proportionalventil.

In vorteilhafter Weiterbildung der Erfindung ist die Magnetspule mittels des Hülsenelements gegen einen Magnetankerraum gasdicht abgedichtet, wobei der Innenraum den Magnetankerraum umfasst. Das Hülsenelement gewährleistet so einen Schutz der Magnetspule vor Verschleiß. Dieser kann auftreten, wenn die Magnetspule mit dem gasförmigen Medium, hier Wasserstoff, in Berührung kommt.

In weiterer Ausgestaltung des Erfindungsgedankens ist es vorteilhaft vorgesehen, dass in dem Magnetankerraum ein hubbeweglicher als Tauchanker ausgebildeter Magnetanker aufgenommen und ein oberer Hubanschlag des Magnetankers an dem zweiten Innenpolelement ausgebildet ist. Der Magnetanker ist mittels der Magnetspule hubbewegbar, wodurch das Proportionalventil gesteuert werden kann.

In vorteilhafter Weiterbildung sind das erste Innenpolelement und das zweite Innenpolelement aus einem magnetischen Material, vorzugsweise eine Eisen-Kobalt-Legierung, hergestellt. Erfindungsgemäß ist das zweite Innenpolelement aus einem magnetischen Material mit einer höheren Sättigungspolarisation hergestellt als das erste Innenpolelement. Die Verwendung von magnetischen Materialien mit hoher Sättigungspolarisation hat den Vorteil, dass bei eingeschalter Magnetspule die Magnetkraft erhöht werden kann. Da solchen Materialien kostensteigernd und umfangreich zu bearbeiten sind, wird nicht der gesamte Innenpol aus diesem Material hergestellt. Außerdem sind diese magnetischen Materialien nicht so stark wasserstoffresistent, so dass eine zu hohe Verwendung vermieden wird.

In weiterer Ausgestaltung der Erfindung ist es vorteilhaft vorgesehen, dass in dem Innenraum ein Schließelement angeordnet ist, wobei das Schließelement mindestens eine an dem Ventilkörper ausgebildete Durchlassöffnung an einem Ventilsitz freigibt oder versperrt. Vorteilhafterweise ist zwischen dem Schließelement und dem Ventilsitz ein elastisches Dichtelement angeordnet, welches Dichtelement am Ventilsitz abdichtet. Dadurch kann auf eine einfache Weise ein Wasserstoffdurchfluss gesteuert werden.

In vorteilhafter Weiterbildung umfasst der Innenraum einen Federraum, in welchem Federraum eine Schließfeder angeordnet ist, wobei die Schließfeder das Schließelement mit einer Kraft in Richtung des Ventilsitzes federbeaufschlagt. Dies gewährleistet die Abdichtung des Proportionalventils bei ausgeschalteter Magnetspule, so dass kein Wasserstoffdurchfluss möglich ist.

Das beschriebene Proportionalventil eignet sich vorzugsweise in einer Brennstoffzellenanordnung zum Steuern einer Wasserstoffzufuhr zu einem Anodenbereich einer Brennstoffzelle. Vorteile sind die geringen Druckschwankungen im Anodenpfad und ein leiser Betrieb.

### Zeichnungen

In der Zeichnung sind Ausführungsbeispiele eines erfindungsgemäßen Proportionalventils zur Steuerung einer Gaszufuhr, insbesondere Wasserstoff, zu einer Brennstoffzelle, dargestellt. Es zeigt in
- Fig. 1: ein erstes Ausführungsbeispiel eines erfindungsgemäßen Proportionalventils mit einem zweiteiligen Innenpol im Längsschnitt,
- Fig. 2: ein zweites Ausführungsbeispiel des erfindungsgemäßen Proportionalventils mit dem zweiteiligen Innenpol im Längsschnitt,

### Beschreibung der Ausführungsbeispiele

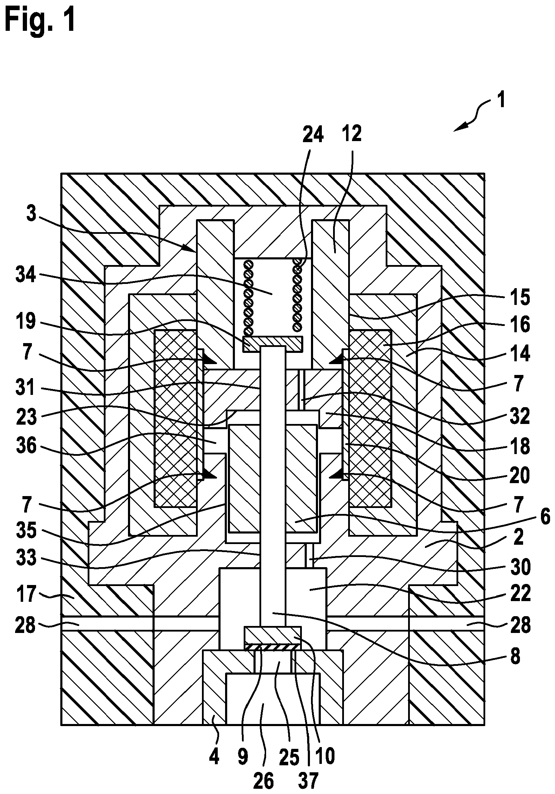

**Fig.1** zeigt ein Ausführungsbeispiel eines erfindungsgemäßen Proportionalventils 1 im Längsschnitt. Das Proportionalventil 1 weist ein Ventilgehäuse 2 mit einem Innenraum 3 auf. In dem Innenraum 3 ist eine Magnetspule 16 mit einem Außenpol 14 und einem Innenpol 15 angeordnet. Der Innenpol 15 umfasst ein erstes Innenpolelement 12 und ein zweites Innenpolelement 18. Das erste Innenpolelement 12 und das zweite Innenpolelement 18 sind über eine Schweißnaht 7 miteinander verbunden.

Das Ventilgehäuse 2, das erste Innenpolelement 12 und das zweite Innenpolelement 18 begrenzen einen Federraum 34, wobei der Federraum 34 als Teil des Innenraums 3 ausgebildet ist. In dem Federraum 34 ist eine Schließfeder 24 angeordnet, welche sich einerseits an dem Ventilgehäuse 2 und andererseits an einem tellerförmigen Ende 19 eines in dem Innenraum 3 angeordneten Verbindungselements 8 abstützt. Das Verbindungselement 8 weist einen ersten Führungsabschnitt 31 an dem zweiten Innenpolelement 18 auf und ragt über den Federraum 34 hinaus in einen Magnetankerraum 36 hinein.

Der Magnetankerraum 36 ist durch das zweite Innenpolelement 18, das Ventilgehäuse 2 und einem Hülsenelement 20 begrenzt und ist als Teil des Innenraums 3 ausgebildet. Das Hülsenelement 20 ist mit dem ersten Innenpolelement 12 und dem Ventilgehäuse 2 durch eine Schweißnaht 7 fest verbunden, so dass das Hülsenelement 20 als Abstandshalter dient und den Magnetankerraum 36 gegen die Magnetspule 16 abdichtet, so dass kein gasförmiges Medium, hier Wasserstoff, an die Magnetspule 16 treten kann. Das Hülsenelement 20 umgibt weiterhin das zweite Innenpolelement 18, wobei in dem Innenpolelement 18 ein erster Verbindungskanal 32 ausgebildet ist, so dass der Federraum 34 und der Magnetankerraum 36 miteinander verbunden sind.

Weiterhin ist in dem Magnetankerraum 36 ein als Tauchanker ausgebildeter Magnetanker 6 angeordnet, welcher mit dem Verbindungselement 8 fest verbunden ist. Das zweite Innenpolelement 18 dient als oberer Hubanschlag 23 für den Magnetanker 6. Der Magnetanker 6 ist in einer Führung 35 in dem Ventilgehäuse 2 geführt.

Durch einen zweiten Führungsabschnitt 33 des Ventilgehäuses 2 ragt das Verbindungselement 8 in einen Zuströmraum 22, welcher als Teil des Innenraums 3 ausgebildet ist, hinein. Der Zuströmraum 22 ist über einen zweiten Verbindungskanal 30 mit dem Magnetankerraum 36 verbunden. Das Verbindungselement 8 ist mit seinem der Schließfeder 24 abgewandten Ende mit einem Schließelement 10 fest verbunden. Das Schließelement 10 weist an seinem dem Verbindungselement 8 abgewandten Ende ein elastisches Dichtelement 9 auf.

Das Ventilgehäuse 2 umfasst einen Düsenkörper 4, welcher eine Durchlassöffnung 25 aufweist, wodurch der Zuströmraum 22 mit einem Abströmraum 26 verbindbar ist. An dem Düsenkörper 4 ist ein flacher Ventilsitz 37 ausgebildet, welcher mit dem elastischen Dichtelement 9 des Schließelements 10 zusammenwirkt, so dass beim Aufliegen des Schließelements 10 mit dem elastischen Dichtelement 9 auf dem flachen Ventilsitz 37 die Durchlassöffnung 25 geschlossen ist.

Das Ventilgehäuse 2 des Proportionalventils 1 ist zum Schutz vor äußeren Einflüssen von einer Kunststoffumspritzung 17 umgeben. Für die Wasserstoff-Zufuhr des Proportionalventils 1 ist in der Kunststoffumspritzung 17 und dem Ventilgehäuse 2 ein Zufuhrkanal 28 ausgebildet.

### Funktionsweise des Proportionalventils 1

Bei nicht bestromter Magnetspule 16 wird das Schließelement 10 über die Schließfeder 24 an den Ventilsitz 37 gedrückt, so dass die Verbindung zwischen dem Zuströmraum 22 und dem Abströmraum 26 unterbrochen ist und kein Gasdurchfluss erfolgt.

Wird die Magnetspule 16 bestromt, so wird eine magnetische Kraft auf den Magnetanker 6 erzeugt, welcher der Schließkraft der Schließfeder 24 entgegengerichtet ist. Diese magnetische Kraft wird über das Verbindungselement 8 auf das Schließelement 10 übertragen, so dass die Schließkraft der Schließfeder 24 überkompensiert wird und das Schließelement 10 vom Ventilsitz 37 abhebt. Ein Gasdurchfluss vom Zuströmraum 22 über die Durchlassöffnung 25 in den Abströmraum 26 ist freigegeben.

Der Hub des Schließelements 10 kann über die Höhe der Stromstärke an der Magnetspule 16 eingestellt werden. Je höher die Stromstärke an der Magnetspule 16, desto größer ist der Hub des Schließelements 10 und desto höher ist auch der Gasdurchfluss im Proportionalventil 1, da die Kraft der Schließfeder 24 hubabhängig ist. Wird die Stromstärke an der Magnetspule 16 reduziert, wird auch der Hub des Schließelements 10 reduziert und somit der Gasdurchfluss gedrosselt.

Wird der Strom an der Magnetspule 16 unterbrochen, wird die magnetische Kraft auf den Magnetanker 6 abgebaut, so dass die Kraft auf das Schließelement 10 mittels des Verbindungselements 8 reduziert wird. Das Schließelement 10 bewegt sich in Richtung der Durchlassöffnung 25 und dichtet mit dem elastischen Dichtelement 9 an dem Ventilsitz 37 ab. Der Gasdurchfluss im Proportionalventil 1 ist unterbrochen.

Alternativ können der Zuströmraum 22 zusammen mit dem Zufuhrkanal 28 und der Abströmraum 26 vertauscht werden, so dass eine Durchflussumkehr in dem Proportionalventil 1 erfolgt.

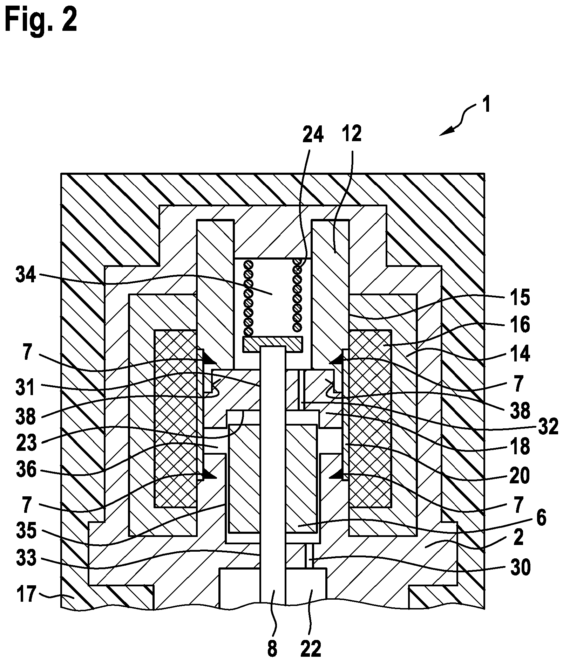

**Fig.2** zeigt ein weiteres Ausführungsbeispiel des erfindungsgemäßen Proportionalventils 1 im Längsschnitt. Im Vergleich zur **Fig.1** weist in diesem Ausführungsbeispiel das zweite Innenpolelement 18 eine gestufte Kontaktfläche 38 auf, mit welcher das zweite Innenpolelement 18 in das erste Innenpolelement 12 gepresst ist.

Der restliche Aufbau und die Funktionsweise des in **Fig.2** gezeigten Ausführungsbeispiels entsprechen dem Ausführungsbeispiel aus der **Fig.1**.

In den Ausführungsbeispielen aus der **Fig.1** und der **Fig.2** sind der Magnetanker 6, das erste Innenpolelement 12 und das zweite Innenpolelement 18 aus einem magnetischen Werkstoff, wie beispielsweise ferritischer Stahl wie FeCo17 oder FeCo50, hergestellt. Das zweite Innenpolelement 18 ist aus einem magnetischen Werkstoff mit höherer Sättigungspolarisation hergestellt als das erste Innenpolelement 12. Somit kann bei Verwendung von magnetischen Werkstoffen mit hoher Sättigungspolarisation eine Erhöhung der Magnetkraft erzielt werden, ohne dass eine Veränderung an der Magnetspule 16 erfolgt.

Alternativ kann statt einer Verschweißung des ersten Innenpolelements 12 und des zweiten Innenpolelements 18 das zweite Innenpolelement 18 auch in dem Hülsenelement 20 geklemmt sein.

Das erfindungsgemäße Proportionalventil 1 kann beispielsweise in einer Brennstoffzellenanordnung Verwendung finden. Mittels des Proportionalventils 1 kann einem Anodenbereich der Brennstoffzelle Wasserstoff aus einem Tank zugeführt werden. Je nach Höhe der Stromstärke an der Magnetspule 16 des Proportionalventils 1, durch welche der Hub des Schließelements 10 betätigt wird, wird damit ein Strömungsquerschnitt der Durchlassöffnung 25 derart verändert, dass kontinuierlich eine bedarfsgerechte Einstellung der der Brennstoffzelle zugeführten Gasströmung erfolgt.

Das Proportionalventil 1 zum Steuern eines gasförmigen Mediums weist somit den Vorteil auf, dass hierbei die Zuführung des ersten gasförmigen Mediums und die Zudosierung von Wasserstoff in den Anodenbereich der Brennstoffzelle mittels elektronisch gesteuerten Anpassung des Strömungsquerschnitts der Durchlassöffnung 25 bei gleichzeitiger Regelung des Anodendrucks wesentlich exakter erfolgen kann. Hierdurch werden die Betriebssicherheit und Dauerhaltbarkeit der angeschlossenen Brennstoffzelle deutlich verbessert, da Wasserstoff immer in einem überstöchiometrischen Anteil zugeführt wird. Zudem können auch Folgeschäden, wie zum Beispiel Beschädigungen eines nachgeordneten Katalysators, verhindert werden.

## Patentansprüche

1. Proportionalventil (1) zum Steuern eines gasförmigen Mediums, insbesondere Wasserstoff, mit einem Ventilgehäuse (2), wobei in dem Ventilgehäuse (2) ein Innenraum (3) ausgebildet ist, wobei in dem Innenraum (3) eine Magnetspule (16) mit einem Magnetanker (6), einem Außenpol (14) und einem Innenpol (15) angeordnet ist, wobei der Innenpol (15) zweiteilig ausgebildet ist und ein erstes Innenpolelement (12) und ein zweites Innenpolelement (18) umfasst, wobei das zweite Innenpolelement (18) als oberer Hubanschlag (23) für den Magnetanker (6) dient,
**dadurch gekennzeichnet, dass** das zweite Innenpolelement (18) aus einem magnetischen Material mit einer höheren Sättigungspolarisation hergestellt ist als das erste Innenpolelement (12).

2. Proportionalventil (1) zum Steuern eines gasförmigen Mediums nach Anspruch 1, **dadurch gekennzeichnet, dass** das erste Innenpolelement (12) und das zweite Innenpolelement (18) fest miteinander verbunden sind, beispielsweise durch eine Verpressung oder eine Schweißnaht (7).

3. Proportionalventil (1) zum Steuern eines gasförmigen Mediums nach Anspruch 1 oder 2, **dadurch gekennzeichnet, dass** das zweite Innenpolelement (18) von einem Hülsenelement (20) umgeben ist.

4. Proportionalventil (1) zum Steuern eines gasförmigen Mediums nach Anspruch 3, **dadurch gekennzeichnet, dass** das Hülsenelement (20) aus einem nicht magnetischen Material hergestellt ist.

5. Proportionalventil (1) zum Steuern eines gasförmigen Mediums nach Anspruch 3 oder 4, **dadurch gekennzeichnet, dass** das Hülsenelement (20) mit dem ersten Innenpolelement (12) und/oder dem Ventilgehäuse (2) fest verbunden ist, beispielsweise durch eine Schweißnaht (7).

6. Proportionalventil (1) zum Steuern eines gasförmigen Mediums nach Anspruch 3, 4 oder 5, **dadurch gekennzeichnet, dass** das zweite Innenpolelement (18) in dem Hülsenelement (20) fixiert ist, vorzugsweise durch eine Verpressung oder Schweißnaht.

7. Proportionalventil (1) zum Steuern eines gasförmigen Mediums nach einem der Ansprüche 3 bis 6, **dadurch gekennzeichnet, dass** die Magnetspule (16) mittels des Hülsenelements (20) gegen einen Magnetankerraum (36) gasdicht abgedichtet ist, wobei der Innenraum (3) den Magnetankerraum (36) umfasst.

8. Proportionalventil (1) zum Steuern eines gasförmigen Mediums nach Anspruch 7, **dadurch gekennzeichnet, dass** in dem Magnetankerraum (36) ein hubbeweglicher, als Tauchanker ausgebildeter Magnetanker (6) aufgenommen und ein oberer Hubanschlag des Magnetankers (6) an dem zweiten Innenpolelement (18) ausgebildet ist.

9. Proportionalventil (1) zum Steuern eines gasförmigen Mediums nach einem der vorhergehenden Ansprüche, **dadurch gekennzeichnet, dass** das erste Innenpolelement (12) und das zweite Innenpolelement (18) aus einem magnetischen Material, vorzugsweise eine Eisen-Kobalt-Legierung, hergestellt sind.

10. Proportionalventil (1) zum Steuern eines gasförmigen Mediums nach einem der vorhergehenden Ansprüche, **dadurch gekennzeichnet, dass** in dem Innenraum (3) ein Schließelement (10) angeordnet ist, wobei das Schließelement (10) mindestens eine an dem Ventilkörper (2) ausgebildete Durchlassöffnung (25) an einem Ventilsitz (37) freigibt oder versperrt.

11. Proportionalventil (1) zum Steuern eines gasförmigen Mediums nach Anspruch 11, **dadurch gekennzeichnet, dass** zwischen dem Schließelement (10) und dem Ventilsitz (37) ein elastisches Dichtelement (9) angeordnet ist, welches Dichtelement (9) am Ventilsitz (37) abdichtet.

12. Proportionalventil (1) zum Steuern eines gasförmigen Mediums nach Anspruch 10 oder 11, **dadurch gekennzeichnet, dass** der Innenraum (3) einen Federraum (34) umfasst, in welchem Federraum (34) eine Schließfeder (24) angeordnet ist, wobei die Schließfeder (24) das Schließelement (10) mit einer Kraft in Richtung des Ventilsitzes (37) federbeaufschlagt.

13. Brennstoffzellenanordnung (100) mit einem Proportionalventil (1) zum Steuern einer Wasserstoffzufuhr zu einer Brennstoffzelle nach einem der vorhergehenden Ansprüche.

## Claims

1. Proportional valve (1) for controlling a gaseous medium, in particular hydrogen, with a valve housing (2), an interior space (3) being configured in the valve housing (2), a magnet coil (16) with a solenoid armature (6), an external pole (14) and an internal pole (15) being arranged in the interior space (3), the internal pole (15) being configured in two pieces and comprising a first internal pole element (12) and a second internal pole element (18), the second internal pole element (18) serving as an upper stroke stop (23) for the solenoid armature (6), **characterized in that** the second internal pole element (18) is produced from a magnetic material with a higher saturation polarization than the first internal pole element (12).

2. Proportional valve (1) for controlling a gaseous medium according to Claim 1, **characterized in that** the first internal pole element (12) and the second internal pole element (18) are connected fixedly to one another, for example by way of an interference fit or a welded seam (7).

3. Proportional valve (1) for controlling a gaseous medium according to Claim 1 or 2, **characterized in that** the second internal pole element (18) is surrounded by a sleeve element (20).

4. Proportional valve (1) for controlling a gaseous medium according to Claim 3, **characterized in that** the sleeve element (20) is produced from a non-magnetic material.

5. Proportional valve (1) for controlling a gaseous medium according to Claim 3 or 4, **characterized in that** the sleeve element (20) is connected fixedly to the first internal pole element (12) and/or the valve housing (2), for example by way of a welded seam (7).

6. Proportional valve (1) for controlling a gaseous medium according to Claim 3, 4 or 5, **characterized in that** the second internal pole element (18) is fixed in the sleeve element (20), preferably by way of an interference fit or welded seam.

7. Proportional valve (1) for controlling a gaseous medium according to one of Claims 3 to 6, **characterized in that** the magnet coil (16) is sealed by means of the sleeve element (20) in a gas-tight manner with respect to a solenoid armature space (36), the interior space (3) comprising the solenoid armature space (36).

8. Proportional valve (1) for controlling a gaseous medium according to Claim 7, **characterized in that** a solenoid armature (6) which is configured as a solenoid plunger and can be moved with a reciprocating action is received in the solenoid armature space (36), and an upper stroke stop of the solenoid armature (6) is configured on the second internal pole element (18).

9. Proportional valve (1) for controlling a gaseous medium according to one of the preceding claims, **characterized in that** the first internal pole element (12) and the second internal pole element (18) are produced from a magnetic material, preferably a cobaltiron alloy.

10. Proportional valve (1) for controlling a gaseous medium according to one of the preceding claims, **characterized in that** a closing element (10) is arranged in the interior space (3), the closing element (10) releasing or shutting off at least one passage opening (25) at a valve seat (37), which at least one passage opening (25) is configured on the valve body (2).

11. Proportional valve (1) for controlling a gaseous medium according to Claim 11, **characterized in that** an elastic sealing element (9) is arranged between the closing element (10) and the valve seat (37), which sealing element (9) seals on the valve seat (37).

12. Proportional valve (1) for controlling a gaseous medium according to Claim 10 or 11, **characterized in that** the interior space (3) comprises a spring space (34), in which spring space (34) a closing spring (24) is arranged, the closing spring (24) spring-loading the closing element (10) with a force in the direction of the valve seat (37).

13. Fuel cell arrangement (100) with a proportional valve (1) for controlling a hydrogen supply to a fuel cell according to one of the preceding claims.

## Revendications

1. Soupape proportionnelle (1) pour la commande d'un milieu sous forme gazeuse, en particulier d'hydrogène, muni d'un boîtier de soupape (2), un espace intérieur (3) étant formé dans le boîtier de soupape (2), une bobine magnétique (16) munie d'un noyau magnétique (6), d'un pôle extérieur (14) et d'un pôle intérieur (15) étant agencée dans l'espace intérieur (3), le pôle intérieur (15) étant formé en deux parties et comprenant un premier élément de pôle intérieur (12) et un deuxième élément de pôle intérieur (18), le deuxième élément de pôle intérieur (18) servant de butée de course supérieure (23) pour le noyau magnétique (6), **caractérisée en ce que** le deuxième élément de pôle intérieur (18) est fabriqué en un matériau magnétique ayant une polarisation de saturation plus élevée que le premier élément de pôle intérieur (12).

2. Soupape proportionnelle (1) pour la commande d'un milieu sous forme gazeuse selon la revendication 1, **caractérisée en ce que** le premier élément de pôle intérieur (12) et le deuxième élément de pôle intérieur (18) sont reliés de manière fixe l'un avec l'autre, par exemple par une compression ou une soudure (7).

3. Soupape proportionnelle (1) pour la commande d'un milieu sous forme gazeuse selon la revendication 1 ou 2, **caractérisée en ce que** le deuxième élément de pôle intérieur (18) est entouré par un élément gaine (20).

4. Soupape proportionnelle (1) pour la commande d'un milieu sous forme gazeuse selon la revendication 3, **caractérisée en ce que** l'élément gaine (20) est fabriqué en un matériau non magnétique.

5. Soupape proportionnelle (1) pour la commande d'un milieu sous forme gazeuse selon la revendication 3 ou 4, **caractérisée en ce que** l'élément gaine (20) est relié de manière fixe avec le premier élément de pôle intérieur (12) et/ou le boîtier de soupape (2), par exemple par une soudure (7).

6. Soupape proportionnelle (1) pour la commande d'un milieu sous forme gazeuse selon la revendication 3, 4 ou 5, **caractérisée en ce que** le deuxième élément de pôle intérieur (18) est fixé dans l'élément gaine (20), de préférence par une compression ou une soudure.

7. Soupape proportionnelle (1) pour la commande d'un milieu sous forme gazeuse selon l'une quelconque des revendications 3 à 6, **caractérisée en ce que** la bobine magnétique (16) est étanchéifiée de manière étanche aux gaz contre un espace de noyau magnétique (36) au moyen de l'élément gaine (20), l'espace intérieur (3) comprenant l'espace de noyau magnétique (36).

8. Soupape proportionnelle (1) pour la commande d'un milieu sous forme gazeuse selon la revendication 7, **caractérisée en ce qu'**un noyau magnétique (6) formé en tant que noyau plongeur, pouvant effectuer un mouvement de course, est reçu dans l'espace de noyau magnétique (36), et une butée de course supérieure du noyau magnétique (6) est formée sur le deuxième élément de pôle intérieur (18).

9. Soupape proportionnelle (1) pour la commande d'un milieu sous forme gazeuse selon l'une quelconque des revendications précédentes, **caractérisée en ce que** le premier élément de pôle intérieur (12) et le deuxième élément de pôle intérieur (18) sont fabriqués en un matériau magnétique, de préférence un alliage fercobalt.

10. Soupape proportionnelle (1) pour la commande d'un milieu sous forme gazeuse selon l'une quelconque des revendications précédentes, **caractérisée en ce qu'**un élément de fermeture (10) est agencé dans l'espace intérieur (3), l'élément de fermeture (10) libérant ou bloquant au moins une ouverture de passage (25) formée sur le corps de soupape (2) sur un siège de soupape (37) .

11. Soupape proportionnelle (1) pour la commande d'un milieu sous forme gazeuse selon la revendication 11, **caractérisée en ce qu'**un élément d'étanchéité élastique (9) est agencé entre l'élément de fermeture (10) et le siège de soupape (37), lequel élément d'étanchéité (9) étanchéifie sur le siège de soupape (37).

12. Soupape proportionnelle (1) pour la commande d'un milieu sous forme gazeuse selon la revendication 10 ou 11, **caractérisée en ce que** l'espace intérieur (3) comprend un espace de ressort (34), dans lequel espace de ressort (34) est agencé un ressort de fermeture (24), le ressort de fermeture (24) sollicitant par ressort l'élément de fermeture (10) avec une force en direction du siège de soupape (37).

13. Agencement de cellule à combustible (100) muni d'une soupape proportionnelle (1) pour la commande d'une amenée d'hydrogène à une cellule à combustible selon l'une quelconque des revendications précédentes.
